# EUROPÄISCHE PATENTANMELDUNG

(11) **EP 4 714 632 A1**
(43) Veröffentlichungstag der Anmeldung: **25.03.2026**
(21) Anmeldenummer: 25203536.5
(22) Anmeldetag: 22.09.2025
(51) Int. Cl.: B29C 45/14, B29C 45/17, B60J 5/10

(54) **KUNSTSTOFF-HOHLLÄNGSTRÄGER, HECKKLAPPE UMFASSEND DEN KUNSTSTOFF-HOHLLÄNGSTRÄGER SOWIE VERFAHREN ZUR HERSTELLUNG DES KUNSTSTOFF-HOHLLÄNGSTRÄGERS**

(30) Priorität: 23.09.2024 DE 102024209099
(71) Anmelder: Volkswagen Aktiengesellschaft, 38440 Wolfsburg (DE)
(72) Erfinder: Gaßmann, Volker, 38440 Wolfsburg (DE)

(57) **Zusammenfassung**

Die Erfindung betrifft einen Kunststoff-Hohllängsträger (3), der in einem Gas- / Fluidinnendruck-Spritzgießprozess hergestellt ist, in dem in einem Spritzgießschritt eine schmelzflüssige Spritzgießmasse (38) des Kunststoffes (20) unter Druck und Wärme in eine Werkzeugkavität (34) eines Spritzgießwerkzeugs (35) einspritzbar ist, und in einem Innendruckformschritt ein Gas-/ Fluid (G) in die Werkzeugkavität (34) einleitbar ist, mittels dem eine noch schmelzflüssige Kunststoffseele verdrängbar ist, und zwar unter Formung eines Hohlkanals (23) im Kunststoff-Hohllängsträger (3). Zur Steigerung der Bauteilstabilität ist im Kunststoffmaterial (20) des Kunststoff-Hohllängsträgers (3) ein vorgefertigtes Einlegerrohr (21) eingebettet, das den Hohlkanal (23) im Querschnitt ringförmig umschließt.

## Beschreibung

Die Erfindung betrifft einen Kunststoff-Hohllängsträger nach dem Oberbegriff des Anspruches 1 sowie ein Verfahren zur Herstellung eines Kunststoff-Hohllängsträgers gemäß Anspruch 9 sowie eine Heckklappe für ein Fahrzeug gemäß Anspruch 10.

Aus der DE 10 2019 209 326 A1 ist ein Kunststoff-Hohllängsträger bekannt, der in einem Gas- / Fluidinnendruck-Spritzgießprozess hergestellt ist. Dieser Prozess weist einen Spritzgießschritt auf, in dem eine schmelzflüssige Spritzgießmasse des Kunststoffes unter Druck und Wärme in eine Kavität eines Spritzgießwerkzeugs einspritzbar ist. Die eingespritzte Spritzgießmasse erstarrt an der, die Kavität begrenzenden Werkzeugfläche, und zwar bei noch schmelzflüssiger, innerer Kunststoffseele. In einem nachfolgenden Innendruckformschritt wird ein Gas- / Fluid in die Werkzeugkavität eingeleitet, mittels dem die schmelzflüssige Kunststoffseele verdrängt wird, und zwar unter Formung eines Hohlkanals im Kunststoff-Hohllängsträger

Aus der DE 10 2022 210 374 A1 ist ein gattungsgemäßer Kunststoff-Hohllängsträger bekannt, bei dem der Hohlkanal mittels eines Einlegerteils umschlossen ist, um die Bauteilsteifigkeit weiter zu erhöhen. Das Einlegerteil wird in einem Vormontageprozess fertigungstechnisch aufwendig aus voneinander separaten Blechteilen zusammengefügt. Anschließend wird das Einlegerteil in die Werkzeugkavität des Spritzgießwerkzeugs eingelegt, um den Gas- / Fluidinnendruck-Spritzgießprozess zu starten.

Aus der DE 100 24 224 A1 Bei ist ein Verfahren zum Innenhochdruckumformen eines rohrförmigen Halbzeugs aus Metall zu einem Formteil bekannt. Demnach wird das Halbzeug in ein wenigstens zweiteiliges Formwerkzeug mit einem der Außenkontur des Formteils entsprechenden Formraum eingelegt, das Formwerkzeug geschlossen, das rohrförmige Halbzeug an seinen offenen Stirnseiten druckfest abgedichtet und von wenigstens einer Stirnseite mit einem Fluid unter hohem Druck in den Formraum eingeformt. Als Fluid wird eine Polymerschmelze verwendet, die durch Spritzgießen mittels eines herkömmlichen Spritzgießaggregats in das Halbzeug gedrückt wird. Aus der DE 10 2009 010 589 A1 ist ein hybrides Verbundprofil bekannt, mit einem Kern aus thermoplastischem Kunststoff und einem den Kern umgebenden Mantel. Der Mantel besteht zumindest abschnittsweise aus wenigstens zwei teilschalenförmigen Halbzeugen, die durch den Kunststoff stoff- oder formschlüssig miteinander verbunden sind. Aus der DE 10 2011 112 913 A1 ist eine Tragstruktur für den Vorderwagen eines Kraftfahrzeugs bekannt. Ein Teil der Tragstruktur weist einen umgeformten Zuschnitt eines Organoblechs mit einer in Längsrichtung verlaufenden rinnenförmigen Vertiefung auf, an dessen Längsrandstreifen einseitig oder beidseitig ein Hohlprofil aus einem thermoplastischen Kunststoffmaterial stoffschlüssig und vorzugsweise formschlüssig angebracht ist. Aus der EP 2 347 920 A1 ist ein Träger für ein Innenverkleidungsbauteil für ein Kraftfahrzeug bekannt, der aus einem thermoplastischen Kunststoff hergestellt ist, in dessen Matrix ein Hohlprofil aus einem faserverstärkten Kunststoff mit einem geschlossenen Querschnitt eingebettet ist, das für eine Luftführung vorgesehen ist.

Die Aufgabe der Erfindung besteht darin, einen Kunststoff-Hohllängsträger bereitzustellen, dessen Bauteilstabilität im Vergleich zum Stand der Technik in fertigungstechnisch einfacher Weise gesteigert ist.

Die Aufgabe ist durch die Merkmale des Anspruches 1, 9 oder 10 gelöst. Bevorzugte Weiterbildungen der Erfindung sind in den Unteransprüchen offenbart.

Die Erfindung geht von einem Kunststoff-Hohllängsträger aus, der in einem Gas-/ Fluidinnendruck-Spritzgießprozess hergestellt ist, in dem in einem Spritzgießschritt eine schmelzflüssige Spritzgießmasse des Kunststoffes unter Druck und Wärme in eine Kavität eines Spritzgießwerkzeugs eingespritzt wird. Die eingespritzte Spritzgießmasse erstarrt an der, die Kavität begrenzenden Werkzeugfläche, und zwar bei noch schmelzflüssiger, innerer Kunststoffseele. In einem nachfolgenden Innendruckformschritt wird ein Gas- / Fluid in die Werkzeugkavität eingeleitet, mittels dem die schmelzflüssige Kunststoffseele verdrängt wird. Auf diese Weise formt sich ein Hohlkanal im Kunststoff-Hohllängsträger. Gemäß dem kennzeichnenden Teil des Anspruches 1 ist zur Steigerung der Bauteilstabilität des Kunststoff-Hohllängsträgers im Kunststoffmaterial zusätzlich ein Hohlprofil-Einlegerteil eingebettet, das als ein vorgefertigtes Einlegerrohr ausgebildet ist. Auf diese Weise kann ein aufwendiger Vormontageprozess vermieden werden, in dem voneinander separate Blechbauteile in einem Fügeprozess aneinander gefügt werden müssen.

Das Einlegerrohr umschließt den Hohlkanal mittelbar oder unmittelbar im Querschnitt ringförmig. Auf diese Weise wird der Hohlkanal im Kunststoff-Hohllängsträger mit Hilfe des Einlegerrohrs zusätzlich verstärkt, so dass am Kunststoff-Hohllängsträger Lastangriffspunkte, zum Beispiel Scharniere, Deckelpuffer oder Gasfederanbindungen, bereitgestellt werden können.

In einer technischen Umsetzung kann das Rohr aus einem faserverstärkten Kunststoff hergestellt sein, der sowohl ein geringes Bauteilgewicht aufweist, als auch dem Kunststoff-Hohllängsträger eine wesentlich größere Bauteilstabilität verleiht. Bevorzugt ist es, wenn das Rohr aus Endlos-Faser-Tapes hergestellt wird, die mit thermoplastischem Kunststoffmaterial ummantelt sind. Die Endlos-Faser-Tapes werden in einem Wickelprozess um einen auf eine Prozesstemperatur erwärmten Wickelkern gewickelt, wodurch sich das Einlegerrohr bildet.

In einer konkreten Ausführungsform kann der Kunststoff-Hohllängsträger ein Heckklappen-Innenteil sein, das Bestandteil einer Heckklappe für ein Fahrzeug ist. Das Heckklappen-Innenteil bildet eine lasttragende Heckklappen-Struktur, die von einem fahrzeugäußeren Heckklappen-Außenteil sichtgeschützt überdeckt ist. Das Heckklappen-Innenteil sowie das Heckklappen-Außenteil umziehen eine Heckscheibe rahmenartig, die auf einem Heckscheibenflansch abgestützt ist, der am Innenumfang des Heckklappen-Außenteiles angeformt ist. Das Heckklappen-Innenteil ist stoff- oder kraftschlüssig am Heckklappen-Außenteil angebunden.

Zur weiteren Steigerung der Bauteilstabilität kann der Kunststoff-Hohllängsträger die nachfolgende Bauteilgeometrie aufweisen: So kann der Kunststoff-Hohllängsträger im Querschnitt schalenförmig mit einem Profilboden sowie mit zwei davon seitlich hochgezogenen Profilflanken ausgebildet sein. Das Einlegerrohr kann dabei im Inneneckbereich zwischen den Profilflanken und dem Profilboden des Kunststoff-Hohllängsträgers im Kunststoffmaterial eingebettet sein.

Die beiden Profilflanken können den Inneneckbereich mit einer freien Höhe überragen. Deren Flanken-Enden sind am Heckklappen-Außenteil angebunden. In diesem Fall ergibt sich zwischen dem Inneneckbereich und den Profilflanken des Kunststoff-Hohllängsträgers sowie dem Heckklappen-Außenteil ein zweiter, im Querschnitt geschlossener Hohlkanal, wodurch die Bauteilstabilität der Heckklappe weiter gesteigert ist.

Zusätzlich kann der Kunststoff-Hohllängsträger Verstärkungsrippen aufweisen, die sich im zweiten Hohlprofil fachwerkartig erstrecken können. Von den Verstärkungsrippen kann sich eine Längsrippe entlang des Einlegerrohrs mit Abstand zu den beiden seitlichen Profilflanken am Inneneckbereich angeformt sein. Die Längsrippe kann über seitlich abragende Querrippen kraftübertragend mit den Profilflanken des Kunststoff-Hohllängsträgers verbunden sein.

Nachfolgend ist ein Ausführungsbeispiel der Erfindung anhand der beigefügten Figuren beschrieben.

Es zeigen:

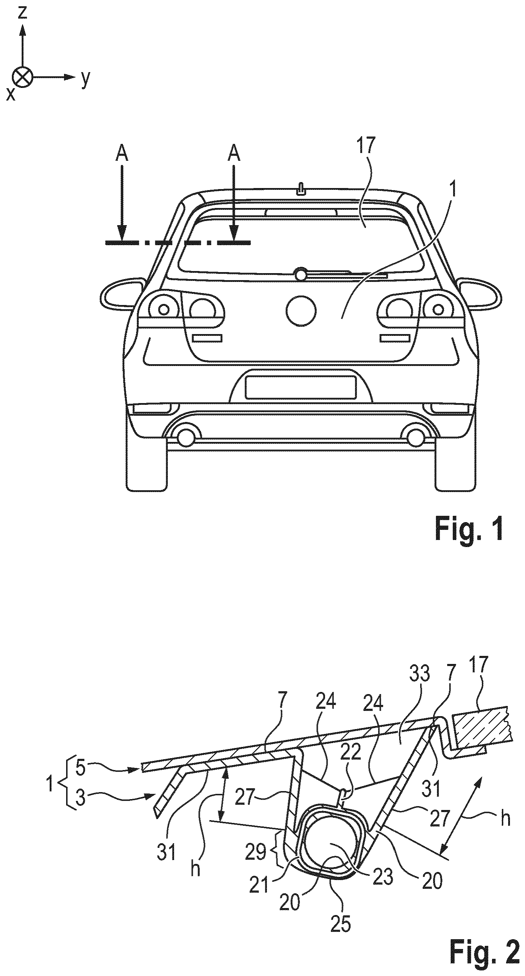

- Figur 1 bis 5: jeweils Ansichten, anhand derer der Aufbau sowie die Herstellung eines Heckklappen-Innenteils für eine Heckklappe eines Fahrzeugs angedeutet ist.

In der Figur 1 ist in einer Ansicht von fahrzeughinten ein zweispuriges Fahrzeug mit einer Heckklappe 1 gezeigt. Die Heckklappe 1 schließt einen heckseitigen Laderaum des Fahrzeugs und ist fahrzeugoben über nicht gezeigte Heckklappenscharniere an einem hinteren Dachquerträger des Fahrzeugs angelenkt. Wie aus der Figur 2 hervorgeht, ist die Heckklappe 1 aus einem fahrzeuginneren Heckklappen-Innenteil 3 und einem fahrzeugäußeren Heckklappen-Außenteil 5 aufgebaut. Das Heckklappen-Innenteil 3 bildet eine lasttragende Heckklappen-Struktur und ist vom fahrzeugäußeren Heckklappen-Außenteil 5 sichtgeschützt überdeckt. In der Figur 2 ist das Heckklappen-Außenteil 5 mit einem Kleber 7 am Heckklappen-Innenteil 3 angebunden. Sowohl das Heckklappen-Innenteil 3 als auch das Heckklappen-Außenteil 5 sind als Kunststoff-Spritzgießteile gefertigt. Zudem sind das Heckklappen-Innenteil 3 und das Heckklappen-Außenteil 5 im Wesentlichen so ausgeführt, wie es in der DE 10 2019 209 326 A1 offenbart ist. Das heißt, dass sowohl das das Heckklappen-Innenteil 3 als auch das Heckklappen-Außenteil 5 rahmenförmig geschlossen eine Heckscheibe 17 umziehen. Die Heckscheibe 17 ist randseitig an einem Heckscheiben-Flansch 15 (Figur 2), der am Innenumfang des Heckklappen-Außenteils 5 angeformt ist.

Ein Kern der Erfindung besteht in der speziellen Gestaltung des Heckklappen-Innenteils 3. Das Heckklappen-Innenteil 3 wirkt - analog zur DE 10 2019 209 326 A1 - als eine Verstärkungsstruktur und ist als ein Kunststoff-Hohllängsträger mit einem Hohlkanal 23 ausgeführt. Der Kunststoff-Hohllängsträger bzw. das Heckklappen-Innenteil 3 erstreckt sich in der Rahmen-Umfangsrichtung (durchgängig oder mit Unterbrechungen) um die Heckscheibe 17 herum und ist in der Figur 2 zusammen mit dem Heckklappen-Außenteil 5 im Querschnitt dargestellt.

Wie aus der Figur 2 hervorgeht, weist der Kunststoff-Hohllängsträger 3 als Hohlprofil-Einlegerteil ein vorgefertigtes Einlegerrohr 21 auf, das im Kunststoffmaterial 20 des Kunststoff-Hohllängsträgers 3 zumindest teilweise eingebettet ist. Das Einlegerrohr 21 umschließt - im Querschnitt betrachtet - einen Hohlkanal 23. Die den Hohlkanal 23 begrenzende Innenseite des Einlegerrohres 21 ist mit Kunststoffmaterial 20 überdeckt, das den Hohlkanal 23 unmittelbar begrenzt.

Das Einlegerrohr 21 ist aus einem faserverstärkten Kunststoff hergestellt, und zwar insbesondere aus Endlos-Faser-Tapes, die mit thermoplastischem Kunststoffmaterial ummantelt sind. Die Endlos-Faser-Tapes werden in einem Wickelprozess um einen auf eine Prozesstemperatur erwärmten Wickelkern gewickelt, wodurch sich das Einlegerrohr 21 bildet.

Wie aus der Figur 2 hervorgeht, ist das Heckklappen-Innenteil 3 im Querschnitt schalenförmig mit einem Profilboden 25 sowie mit zwei davon seitlich hochgezogenen Profilflanken 27 ausgebildet. Das Einlegerrohr 21 ist in einem Inneneckbereich 29 im Kunststoffmaterial 20 des Heckklappen-Innenteils 3 eingebettet. Der Inneneckbereich 29 wird zwischen den Profilflanken 27 und dem Profilboden 25 des Heckklappen-Innenteils 3 aufgespannt. Die beiden Profilflanken 25 überragen den Inneneckbereich 29 mit einer freien Profilhöhe h und sind mit ihren Flanken-Enden 31 mittels des Klebers 7 am Heckklappen-Außenteil 5 verklebt.

Wie aus der Figur 2 weiter hervorgeht, ist zwischen dem Inneneckbereich 29 und den Profilflanken 27 des Heckklappen-Innenteils 3 sowie dem Heckklappen-Außenteil 5 ein zweiter, im Querschnitt ebenfalls geschlossener Hohlkanal 33 ausgebildet.

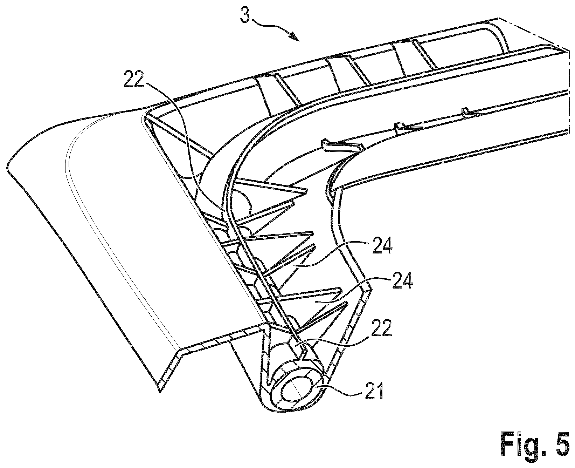

Wie aus den Figuren 2 oder 5 hervorgeht, ist am Inneneckbereich 29 eine Längsrippe 22 angeformt, die sich entlang des Einlegerrohres 21 mit seitlichem Abstand zu den beiden Profilflanken 27 erstreckt und in den zweiten Hohlkanal 33 einragt. Die Längsrippe 22 ist über seitlich abragende Querrippen 24 kraftübertragend mit den Profilflanken 27 des Kunststoff-Hohllängsträgers 3 verbunden.

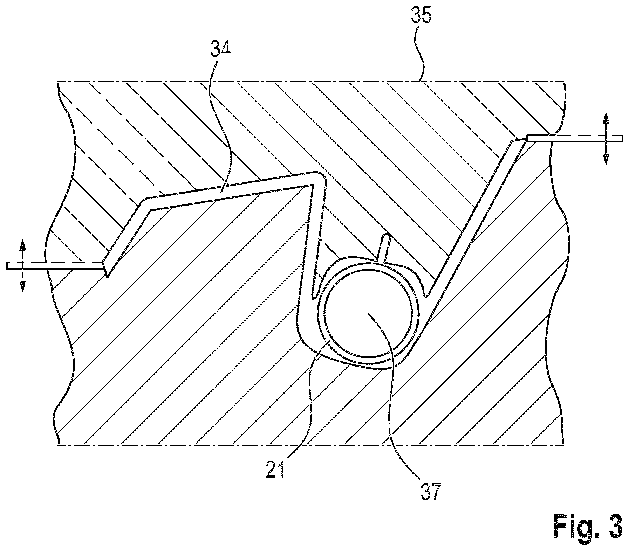

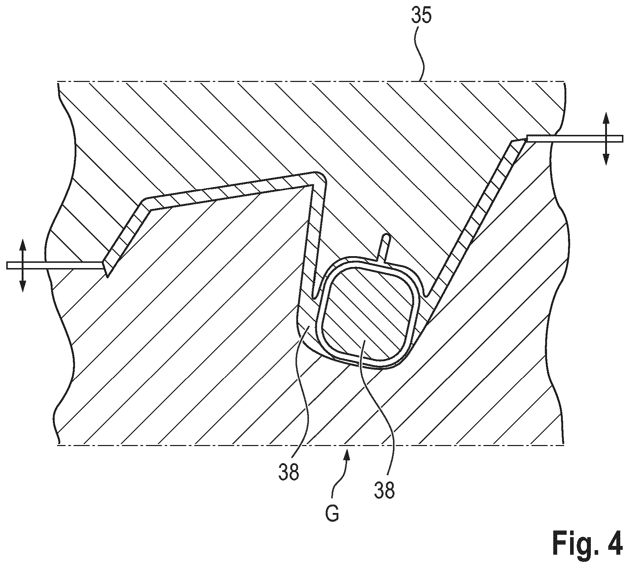

Nachfolgend wird anhand der Figuren 3 und 4 ein Verfahren zur Herstellung des in der Figur 2 gezeigten Kunststoff-Hohllängsträgers 3 beschrieben. Demzufolge wird das Einlegerrohr 21 in einem Einlegeschritt (Figur 3) in eine Werkzeugkavität 34 eines Spritzgießwerkzeugs 35 eingelegt. Anschließend startet der Spritzgießschritt (Figur 4), bei dem die Werkzeugkavität 34 und insbesondere auch ein vom Einlegerrohr 21 begrenzter Profilraum 37 (Figur 3) vollständig mit der schmelzflüssigen Spritzgießmasse 38 (Figur 4) gefüllt werden. Im weiteren Prozessverlauf folgt ein Innendruckformschritt, in dem eine Gasfüllung G (Figur 4) unter Druck in die Werkzeugkavität 34 eingeleitet wird. Dadurch wird die im Profilraum 37 des Hohlprofil-Einlegerteils 21 befindliche, noch schmelzflüssige Kunststoffseele unter Formung des Hohlkanals 23 zumindest teilweise verdrängt. Nach erfolgter Aushärtung der Spritzgießmasse 38 wird ein Entnahmeschritt durchgeführt, in dem der fertiggestellte Kunststoff-Hohllängsträger 3 aus dem Spritzgießwerkzeug 35 entnommen wird.

### Bezugszeichenliste

- 1: Heckklappe
- 3: Heckklappen-Innenteil bzw. Kunststoff-Hohllängsträger
- 5: Heckklappen-Außenteil
- 7: Kleber
- 15: Heckscheiben-Flansch
- 17: Heckscheibe
- 20: Kunststoffmaterial
- 21: Einlegerrohr
- 22: Längsrippe
- 23: Hohlkanal
- 24: Querrippe
- 25: Profilboden
- 27: Profilflanken
- 29: Inneneckbereich
- 31: Flanken-Enden
- 33: zweiter Hohlkanal
- 34: Werkzeugkavität
- 35: Spritzgießwerkzeug
- 37: Profilraum
- 38: Spritzgießmasse
- h: Profilhöhe
- G: Gasfüllung

## Patentansprüche

1. Kunststoff-Hohllängsträger (3), der in einem Gas- / Fluidinnendruck-Spritzgießprozess hergestellt ist, in dem in einem Spritzgießschritt eine schmelzflüssige Spritzgießmasse (38) des Kunststoffes (20) unter Druck und Wärme in eine Werkzeugkavität (34) eines Spritzgießwerkzeugs (35) einspritzbar ist, und in einem Innendruckformschritt ein Gas- / Fluid (G) in die Werkzeugkavität (34) einleitbar ist, mittels dem eine noch schmelzflüssige Kunststoffseele verdrängbar ist, und zwar unter Formung eines Hohlkanals (23) im Kunststoff-Hohllängsträger (3), **dadurch gekennzeichnet, dass** zur Steigerung der Bauteilstabilität im Kunststoffmaterial (20) des Kunststoff-Hohllängsträgers (3) ein vorgefertigtes Einlegerrohr (21) eingebettet ist, das den Hohlkanal (23) im Querschnitt ringförmig umschließt.

2. Kunststoff-Hohllängsträger nach Anspruch 1, **dadurch gekennzeichnet, dass** im Spritzgießschritt die Werkzeugkavität (34), insbesondere ein vom Einlegerrohr (21) begrenzter Profilraum (37) vollständig mit der schmelzflüssigen Spritzgießmasse (38) füllbar ist, und dass im anschließenden Innendruckformschritt die im Profilraum (37) des Einlegerrohrs (21) befindliche Kunststoffseele unter Formung des Hohlkanals (23) vollständig oder teilweise verdrängbar ist.

3. Kunststoff-Hohllängsträger nach Anspruch 1 oder 2, **dadurch gekennzeichnet, dass** das Einlegerrohr (21) aus faserverstärktem Kunststoff hergestellt ist, insbesondere aus Endlos-Faser-Tapes, die mit thermoplastischem Kunststoffmaterial ummantelt sind, und dass insbesondere die Endlos-Faser-Tapes in einem Wickelprozess um einen auf eine Prozesstemperatur erwärmten Wickelkern wickelbar sind, um das Einlegerrohr (21) zu formen.

4. Kunststoff-Hohllängsträger nach Anspruch 1, 2 oder 3, **dadurch gekennzeichnet, dass** der Kunststoff-Hohllängsträger (3) ein Heckklappen-Innenteil einer Heckklappe (1) ist, wobei der Kunststoff-Hohllängsträger (3) eine lasttragende Heckklappen-Struktur bildet, die von einem fahrzeugäußeren Heckklappen-Außenteil (5) überdeckt ist, dass das Heckklappen-Innenteil (3) und das Heckklappen-Außenteil (5) eine Heckscheibe (17) rahmenartig umziehen, und dass das Heckklappen-Innenteil stoff- und/oder kraftschlüssig am Heckklappen-Außenteil (5) angebunden ist.

5. Kunststoff-Hohllängsträger nach einem der vorhergehenden Ansprüche, **dadurch gekennzeichnet, dass** der Kunststoff-Hohllängsträger (3) im Querschnitt schalenförmig mit einem Profilboden (25) sowie mit zwei davon seitlich hochgezogenen Profilflanken (27) ausgebildet ist, und dass das Einlegerrohr (21) im Inneneckbereich (29) zwischen den Profilflanken (27) und dem Profilboden (25) des Kunststoff-Hohllängsträgers (3) im Kunststoffmaterial (20) eingebettet ist.

6. Kunststoff-Hohllängsträger nach Anspruch 5, **dadurch gekennzeichnet, dass** die beiden Profilflanken (27) den Inneneckbereich (29) mit einer freien Höhe (h) überragen und mit ihren Flanken-Enden (31) am Heckklappen-Außenteil (5) anbindbar sind.

7. Kunststoff-Hohllängsträger nach Anspruch 6, **dadurch gekennzeichnet, dass** zwischen dem Inneneckbereich (29) und den Profilflanken (27) des Kunststoff-Hohllängsträgers (3) sowie dem Heckklappen-Außenteil (5) ein zweiter im Querschnitt geschlossener Hohlkanal (33) ausgebildet ist.

8. Kunststoff-Hohllängsträger nach einem der Ansprüche 4 bis 7, **dadurch gekennzeichnet, dass** der Kunststoff-Hohllängsträger (3) Verstärkungsrippen aufweist, von denen zumindest eine Längsrippe (22) am Inneneckbereich (29) angeformt ist, dass sich die Längsrippe (22) entlang des Einlegerrohres (21) mit seitlichem Abstand zu den beiden Profilflanken (27) erstreckt, und dass insbesondere die Längsrippe (22) über seitlich abragende Querrippen (24) kraftübertragend mit den Profilflanken (27) des Kunststoff-Hohllängsträgers (3) verbunden ist.

9. Verfahren zur Herstellung eines Kunststoff-Hohllängsträgers (3) nach einem der vorhergehenden Ansprüche.

10. Heckklappe mit einem Heckklappen-Innenteil, das als Kunststoff-Hohllängsträger (3) nach einem der Ansprüche 1 bis 8 ausgebildet ist.
